# EUROPEAN PATENT APPLICATION

(11) **EP 1 449 971 A1**
(43) Date of publication of application: **25.08.2004**
(21) Application number: 04075496.2
(22) Date of filing: 18.02.2004
(51) Int. Cl.: E03F 5/042, F16K 15/03, E03F 7/04

(54) **Drain for discharging waste water and/or surface water, mounting of such a drain and valve therefor**

(30) Priority: 18.02.2003 NL 1022727
(71) Applicant: KWT Holding B.V., 8256 SN Biddinghuizen (NL)
(72) Inventor: Boers, Hendrik Albertus, 8252 GP Dronten (NL)
(74) Representative: Prins, Adrianus Willem, Mr. Ir.

(57) **Abstract**

A drain for the purpose of discharging, for instance, sewage water, industrial wastewater and/or surface water, which drain (10) is at least provided with a drainage channel (1) extending substantially in vertical direction, wherein the drain (10) is provided with a valve (3) comprising a floating body (4) which, under the influence of rising water, is movable from a release position to a closing position in order to close a respective drain passage (5), characterized in that, both in the closing position and the release position, the floating body (4) extends inside the said drainage channel (1).

The invention further provides valve, evidently intended for such a drain (10).

## Description

The invention relates to a drain for the purpose of discharging, for instance, sewage water, industrial wastewater and/or surface water, which drain is at least provided with a drainage channel extending substantially in vertical direction, with the drain being provided with a valve comprising a floating body which, under the influence of rising water, is movable from a release position to a closing position in order to close a respective drain passage.

Such a drain is known from practice. An advantage of the known drain is that the flow rate of the water flowing through the drainage channel is relatively high, which prevents accumulation of dirt. The known drain is provided with a valve housing which has been placed between two vertical drain pipes by means of pipe couplings. The valve housing of the known drain comprises a ball check valve. This valve comprises a spherical floating body which, under the influence of rising water, is movable from a release position extending outside the drain passage to a closing position extending inside the drain passage in order to close the drain. In this manner, the drain can easily be closed, simply under the influence of the buoyant force exerted by rising water on the floating sphere.

A disadvantage of the known drain is that it takes up relatively much space. This makes mounting of the drain difficult, particularly at locations where little space is available, for instance underground. Further, the valve housing of the known drain needs to be placed between two parts of the drain. Thus, the valve housing forms an extension of the drain, which is not in all cases desired.

It is the object of the present invention to obviate these disadvantages of the known drain while preserving its advantages. In particular, the invention contemplates a drain which is relatively compact.

For this purpose, according to the invention, the drain is characterized by the measures of claim 1.

Both in the closing position and the release position, the floating body extends inside the drainage channel, which makes the drain very compact. Use of separate valve housings projecting substantially outside the drainage channel, which are difficult to mount, can be avoided in this manner. In addition, this drain is easy to mount, in particular at locations where relatively little space is available.

According to a preferred embodiment, the floating body is arranged pivotally between the closing and release position by means of a hinge.

In this manner, by simple means, the floating body can be maintained in a desired position near the drain passage to be closed. In normal use, the floating body is simply pivoted to the release position under the influence of the force of gravity, so that the drain passage is opened. Preferably, in the release position, the floating body extends in a downward direction, in particular substantially obliquely downwards, to prevent dirt accumulation on this body. When the water level rises, the floating body pivots from the release position to the closing position, under the influence of the buoyant force, to close the drain passage. The hinge may comprise, for instance, a flexible material, in particular a durable, flexible plastic. In addition, this material can effect a good closing with an edge of the drain passage.

Further elaborations of the invention are described in the subclaims. The invention will now be described on the basis of an exemplary embodiment and with reference to the drawing, in which:

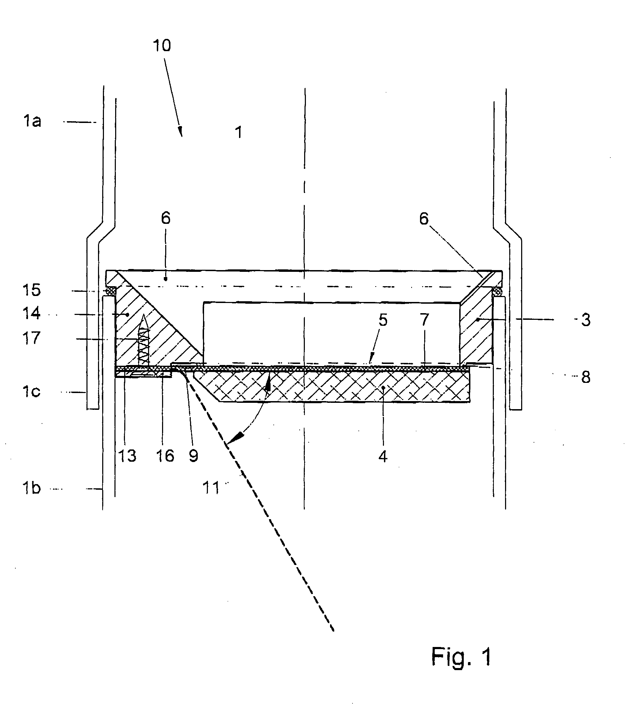

Fig. 1 shows a cross-sectional view of an exemplary embodiment of the invention.
Fig. 1 shows at least a part of a drain 10 for the purpose of discharging, for instance, sewage water, industrial wastewater and/or surface water. It is noted that, in this context, sewage water and wastewater should be taken in a broader sense than being only a liquid. The solid matter which can be carried along with liquid in the sewer, such as sewage sludge, or organic and inorganic waste, also falls within the term of sewage water and/or wastewater.

The drain 10 is provided with a drainage channel 1 extending substantially in vertical direction, comprising an upper pip e section 1a and a lower pipe section 1b. The two pipe sections 1a, 1b extend substantially in vertical direction. At a lower end, the upper pipe section 1a is provided with an expanded pipe part 1c extending over an upper end of the lower section 1b. The pipe sections 1a, 1b are connected to each other via this expanded pipe part 1c, for instance by a glue connection.

The drain 10 is further provided with a valve 3 comprising a floating body 4 which is movable between a closing position and a release position in order to close and release, respectively, a respective drain passage 5. Fig. 1 shows a closed valve position, with the floating body being in the closing position. In this position, the floating body 4 extends substantially in horizontal direction to close the drain passage 5. Here, a top side of the floating body 4 abuts an upstanding closing edge 8 surrounding the drain passage 5. In use, the floating body 4 is brought to this closing position by water which has risen from the lower pipe section 1b to the valve 3.

The release position of the floating body 4 is diagrammatically shown in the drawing by a dash line 11. In the latter position, the floating body 4 extends obliquely downwards in the lower pipe section 1b, in a direction away from the wall of the drain 10. In normal use, the floating body 4 has been brought to this position by the force of gravity, so that liquid can flow from the upper pipe section 1a via the drain passage 5 to the lower pipe section 1b. The floating body 4 can be pivoted from this release position to the closing position shown by rising water.

As the Figure shows, the valve 3 particularly comprises a valve sleeve 3 extending substantially in the channel 1, at least provided in the pipe sections 1a, 1b, which valve sleeve 3 is provided with the floating body 4 and the drain passage 5. A top side 6 of the valve sleeve 3 extends from an outer circumference substantially along a conical plane to the passage 5 to provide a good flow.

The valve sleeve 3 extends substantially inside the upper end of the lower pipe section 1b. The sleeve 3 is provided with a flange 12 projecting over an upper edge of the lower pipe section 1b. Between this flange 12 and the lower pipe section 1b, a flexible O-ring 15 has been provided for the purpose of a watertight connection. The valve sleeve 3 can be connected to the drainage channel 1 in different manners, for instance by gluing to the lower pipe section 1b. An advantage of using this valve sleeve 3 substantially fitting in the pipe section 1b is that the valve 3 is easy to mount in the channel, in particular before the upper pipe section 1a has been provided on the lower section 1b.

The floating body 4 is arranged pivotally between the closing position and release position in the drain 10 by means of a hinge 9. The hinge 9 is an integral part of a plate from flexible material 7 extending over a top side of the floating body 4. This material 7 is, for instance, a flexible plastic, for instance a synthetic rubber. The flexibility of this material 7 is such that the flexible hinge 9 maintains the floating body 4 in the release position extending obliquely downwards, at least under the influence of the force of gravity in normal use.

The closing edge 8 has a relatively narrow design, viewed in the plane of the drain passage 5. The flexible material 7 of the floating body 4 can form a good, substantially fluid-tight connection with this closing edge 8 in the closed valve position, in particular when this closing edge 8 is slightly pressed into the flexible top plate 7 of the floating body 4 under the influence of the buoyant force exerted on the floating body 4.

The hinge 9 comprises a flap 13 which is connected to a lower side of an expanded part 14 of the valve sleeve 3. As the Figure shows, the flap 13 is clamped between the valve sleeve 3 and a clamping plate 16 by means of screws 17. However, this connection may also be brought about in different manners, for instance by a glue connection. The top side of the expanded part 14 of the valve sleeve 3 also extends along the conical plane.

Because, both in the closing and the release position, the floating body 4 extends inside the drainage channel 1, the drain 10 can have a compact design. Because the drainage channel 1 extends substantially in vertical direction, while the floating body extends obliquely downwards in the release position, accumulation of dirt in the drain is adequately prevented. Additional advantages of the drain provided by the invention and the valve used therein are that they can be designed relatively inexpensively and simply. In addition, in the release position, the floating body 4 forms no or only a small obstacle to the substance flowing through the drain 10, which contributes to a good drain flow.

The drain 10 provided by the invention is particularly easy to mount. The drain 10 may, for instance, be connected downstream to fluid reception means, for instance a sewage outlet, main drain pipe, a sewage collecting pipe, a fluid tank, sewage gutter, a sewage basin, or the like. For this purpose, the fluid reception means may, for instance, be provided with an inlet opening, to which a downstream end of the drain 10 is coupled substantially fluid-tightly. For certain fluid reception means, for instance collecting drain pipes extending in horizontal direction, a top wall of the fluid reception means can simply be provided with the inlet opening from above. The drain 10 can then easily be placed on this inlet opening, while the drain 10 may or may not be provided with the valve 3.

In addition, the valve 3 is available separately from the drain 10, not to be provided in the drain 10 until mounting. In that case, the valve 3 may, for instance, be mounted in the valve sleeve 3 described in order to be introduced into the channel 1. In addition, the valve 3 may already have been provided in a separate channel section when delivered, with which channel section the channel 1 can then be assembled. In each of these cases, it is avoided that the mounting of the valve 3 results in a substantial enlargement of a cross section of the drain 10.

It will be clear to a skilled person that the invention is not limited to the exemplary embodiment described. Various modifications are possible within the scope of the invention as set forth in the following claims.

The drain 10 may, for instance, include a certain angle with a vertical plane. The drain may further be provided with one or more bends and/or other drain elements.

In addition, in the closing position, the floating body 4 may extend in a substantially horizontal direction, or include a certain angle with the horizontal plane. The floating body 4 may be designed in various forms, for instance circular, square, angled or a combination of these or other forms. The floating body 4 of the valve 3 may further comprise various materials, in particular material having a relatively low density with respect to water, and/or may have a hollow design.

The drainage channel 1 may have various forms, viewed in cross section, for instance circular, square, angled or a combination of these or other forms. The drainage channel 1 may, for instance, comprise different pipe sections which are integrally and/or detachably coupled to one another. Further, the drain channel may be manufactured from various materials, for instance plastic, concrete and the like.

Further, the drain may be provided with various means to maintain the floating body 4 in the release position. The hinge 9 may, for instance, be designed to let the floating body pivot no further downwards than this position. Further, the valve 3 may, for instance, comprise a stop or the like to stop the floating body 4 in this position.

In addition, the hinge 9 can be designed in various manners, for instance as a hinge comprising a number of parts pivotable with respect to one another, such as a metal hinge, or a hinge consisting of an elastic material, for instance a rubber hinge or nylon-fabric hinge which is easy to maintain.

The valve, in particular the sleeve 3, can be designed in various dimensions. Preferably, standard dimensions are used, in order that the valve 3 can easily be mounted in standard drain pipes.

Further, the floating body 4 may be movably arranged in different manners, for instance pivotably, rotatably or the like. In a rotatable arrangement, a rotation axis of the floating body may extend in, for instance, substantially horizontal direction.

## Claims

1. A drain for the purpose of discharging, for instance, sewage water, industrial wastewater and/or surface water, which drain (10) is at least provided with a drainage channel (1) extending substantially in vertical direction, wherein the drain (10) is provided with a valve (3) comprising a floating body (4) which, under the influence of rising water, is movable from a release position to a closing position in order to close a respective drain passage (5), **characterized in that**, both in the closing position and the release position, the floating body (4) extends inside the said drainage channel (1).

2. A drain according to claim 1, wherein the floating body (4) is arranged pivotally between the closing and release position by means of a hinge (9).

3. A drain according to claim 1 or 2, wherein the valve is provided with a valve sleeve (3) extending substantially in the said channel (1), which valve sleeve (3) is provided with the floating body (4) and the said drain passage (5).

4. A drain according to claim 3, wherein a top side (6) of the said sleeve (3) extends from an outer circumference substantially along a conical plane to the said passage (5).

5. A drain according to any one of the preceding claims, wherein the floating body (4) is provided, on a top side, with a flexible material (7) in order to connect, in the closing position, substantially fluid-tightly to an edge (8) of the said drain passage (5).

6. A drain according to claim 5, wherein the said flexible material contains plastic, for instance a synthetic rubber.

7. A drain according to at least claims 4 and 5, wherein the said hinge (9) comprises an integral part of the said flexible material (7).

8. A drain according to at least claim 5, wherein the valve (3) is provided with a closing edge (8) extending along the drain passage (5), projecting towards the floating body (4) when that floating body (4) is in the closing position.

9. A drain according to any one of the preceding claims, wherein, in the closing position, the floating body (4) extends substantially in horizontal direction.

10. A drain according to any one of the preceding claims, wherein, in the release position, the floating body (4) extends downwards, in particular substantially obliquely downwards.

11. A drain according to any one of the preceding claims, wherein at least a part (1a) of the drainage channel (1) extending above the valve (3) extends substantially in vertical direction.

12. A drain according to any one of the preceding claims, wherein the drainage channel (1) is at least provided with two pipe sections (1a, 1b) coupled to each other, wherein the valve (3) is provided substantially inside one of these two pipe sections (1b) in a position at or near the coupling (1c) between these pipe sections (1a, 1b).

13. Mounting of a drain according to any one of the preceding claims, wherein the drain (10) is connected downstream to fluid reception means, for instance a main drain pipe, a fluid tank.

14. Mounting according to claim 13, wherein the fluid reception means are provided with an inlet opening to which a downstream end of the drain (10) is coupled substantially fluid-tightly.

15. Mounting according to claim 13, wherein a top wall of the fluid reception means is provided with the said inlet opening.

16. A valve, evidently intended for a drain of one of claims 1-12.
